Europäisches Patentamt

European Patent Office

Office européen des brevets

(19)

(11) Numéro de publication : **0 494 027 A1**

# (12) DEMANDE DE BREVET EUROPEEN

(21) Numéro de dépôt : **91403569.6**

(22) Date de dépôt : **31.12.91**

(51) Int. Cl.$^5$ : **G01S 17/88,** G01S 7/48

(30) Priorité : **04.01.91 FR 9100058**

(43) Date de publication de la demande :
**08.07.92 Bulletin 92/28**

(84) Etats contractants désignés :
**DE ES GB**

(71) Demandeur : **REGIE NATIONALE DES USINES RENAULT S.A.**
**34, Quai du Point du Jour**
**F-92109 Boulogne Billancourt (FR)**

(72) Inventeur : **Nguyen, Hoang Giang**
**9, rue de Belfort**
**F-91130 Ris-Orangis (FR)**
Inventeur : **Faure, Robert**
**La Pépinière, Bât. 3 - Rue A. Ranc**
**F-92350 Le Plessis Robinson (FR)**
Inventeur : **Vayssade, Hervé**
**66, rue Daguerre**
**F-75014 Paris (FR)**

(54) **Dispositif de détection d'obstacles et de mesure de distance à l'aide d'un radar à faisceau laser.**

(57) Dispositif de détection d'obstacles et de mesure de distance à l'aide d'un radar à faisceau laser comportant une diode laser d'émission (9), une optique d'émission (4), un miroir de balayage (5) monté sur un plateau (6) entraîné en rotation par un moteur (7), une optique de réception (8) et un récepteur d'écho (10), caractérisé en ce que le miroir (5) exécute un mouvement de rotation continu autour d'un axe vertical et en ce qu'il est incliné d'un angle α par rapport à cet axe.

FIG.1

EP 0 494 027 A1

L'invention se rapporte à un dispositif permettant de détecter les obstacles éventuels se trouvant sur le trajet d'un véhicule, et de mesurer la distance séparant le véhicule de l'obstacle. Elle met en oeuvre un radar à faisceau laser du type LIDAR (ligth detection and ranging).

Le LIDAR est à ce jour largement utilisé dans le domaine militaire, par exemple pour assurer la sécurité des hélicoptères en vol en detectant les lignes à haute tension ou pour surprendre des engins ennemis, de nuit. Embarqué sur un avion, le LIDAR est capable d'assurer le maintien de l'appareil à une distance constante par rapport au sol, avec la précision nécessaire à l'exécution de missions de reconnaissance cartographique. On connaît encore une autre application militaire du LIDAR, celle-ci d'importance stratégique, dans le guidage en vol des missiles de croisière à basse altitude.

Depuis un passe plus récent, on a vu également se développer un certain nombre d'applications civiles du LIDAR, notamment dans le domaine de la sécurite routière. Les LIDAR actuellement mis en oeuvre dans ce type d'applications se regroupent en deux grandes familles : les LIDAR à implusions et les LIDAR à émission continue. Parmi ces derniers on distingue les LIDAR à modulation du faisceau d'émission et les LIDAR à effet Doppler. La famille des LIDAR à impulsions comporte quant à elle, des LIDAR à émission de trains d'impulsions, et des LIDAR à mono-impulsions.

La présente invention repose sur l'application d'un LIDAR à train d'impulsions, à la détection des obstacles se trouvant sur le trajet d'un véhicule, et à la mesure de leur distance. Cette application entraînant la couverture d'un champ relativement large, il est nécessaire de prévoir un balayage de ce champ par le faisceau d'émission.

Dans un dispositif de détection d'obstacles à l'aide d'un radar à faisceau laser, le balayage du faisceau d'émission peut être mécanique ou optoélectronique. Le développement récent des composants électroniques, tels que les modules utilisant la réflexion d'un faisceau laser sur un réseau d'ondes ultrasonores stationnaires dans un milieu cristallin offre une solution efficiente au problème du balayage. Cette technique a l'avantage d'augmenter la vitesse du balayage, mais elle a pour inconvénient de ne restituer qu'un secteur angulaire restreint. Cet inconvénient est lie au principe physique de la diffraction de Bragg.

Le balayage mécanique du faisceau d'émission reste donc à ce jour la solution la plus appropriée à la détection d'obstacles sur le trajet d'un véhicule routier. On peut par exemple placer sur le trajet du faisceau un miroir tournant dont la rotation permet au faisceau d'émission de couvrir un secteur angulaire déterminé, ou un tambour à plusieurs facettes. Dans ce dernier cas, l'angle de balayage dépend directement du nombre de facettes du tambour.

La détection d'obstacles sur le trajet d'un véhicule routier mérite pour être efficace, un balayage dans deux dimensions, à savoir un balayage horizontal ou "gisement", et un balayage vertical, ou "site". L'angle de balayage en gisement peut atteindre 30 degrés, tandis que l'angle de balayage en site est de l'ordre de cinq degrés. Dans la pratique, la finesse de détection recherchée nécessite donc un faisceau très fin en gisement. Pour cette raison, l'optique d'émission doit conserver une ouverture assez faible.

Une solution évidente au problème du balayage croise selon deux directions orthogonales, consiste à placer sur le trajet du faisceau d'émission un second miroir, tournant autour d'un axe perpendiculaire au premier. Cette solution présente toutefois l'inconvénient de diminuer la fréquence des acquisistions d'informations par l'appareil de réception des échos de retour. L'invention propose donc une autre solution au problème de balayage selon deux dimensions, permettant d'obtenir un balayage suffisant en site et en gisement, sans recourir à un second miroir de balayage.

L'invention concerne un dispositif de détection d'obstacles et de mesure de distance à l'aide d'un radar à faisceau laser, comportant une diode laser d'émission, une optique d'émission, un miroir de balayage monté sur un plateau entraîné en rotation par un moteur, une optique de réception et un récepteur d'écho. Ce dispositif est caractérisé en ce que le miroir exécute un mouvement de rotation continue autour d'un axe vertical, et en ce qu'il est incliné d'un angle par rapport à cet axe.

Selon un mode de réalisation de l'invention, au cours d'une résolution complète du miroir, le faisceau d'émission balaye successivement deux bandes de même largeur décalées en hauteur, la première inclinée d'un angle + $\alpha$ par rapport à l'horizontale, correspondant à la première moitié de la résolution du miroir, tandis que la seconde, inclinée d'un angle - $\alpha$ par rapport à l'horizontale, correspond à la seconde moitie de la révolution du miroir.

Selon un mode de réalisation de l'invention, le récepteur d'écho est une photodiode à avalanche de forme rectangulaire.

Selon un mode de réalisation de l'invention, le dispositif comporte un codeur mécanique permettant de détecter les origines angulaires absolues du balayage.

Selon un mode de réalisation de l'invention, le codeur mécanique est constitué de deux aimants permanents montes en position diamétralement opposée sur le plateau, et défilant devant deux détecteurs à effet Hall places à proximité du plateau, diamétralement opposés par rapport au plateau, et n'entrant pas en contact avec les aimants.

Selon un mode de réalisation de l'invention, le dispositif comporte un codeur optique solidaire en rotation du plateau, et délivrant des impulsions dont le nombre, compte à partir du passage du miroir devant l'origine angulaire absolue du balayage, est exploite pour déterminer l'origine angulaire relative du balayage et la fin de celui-ci, l'origine angulaire relative et la fin du balayage correspondant respectivement au début et à la fin de l'émission du faisceau laser.

Selon un mode de réalisation de l'invention le dispositif comporte un microprocesseur contrôlant la vitesse de rotation du moteur entraînant le plateau tournant et le codeur optique, et recevant les impulsions émises par les détecteurs à effet Hall et par le codeur optique, par l'intermédiaire d'un amplificateur.

Selon un mode de réalisation de l'invention, le dispositif comporte une horloge responsable, sous le contrôle du microprocesseur, du de déclenchement et de l'arrêt de l'émission du faisceau.

Selon un mode de réalisation de l'invention, lorsque le récepteur d'écho reçoit un écho dû à la rencontre d'un obstacle par le faisceau d'émission, l'horloge détermine la durée t séparant le début de l'émission, de la réception de l'echo.

Selon un mode de réalisation de l'invention, le dispositif comporte, une première carte de conversion de temps calculant, à partir de la durée t déterminée par l'horloge, la distance de l'obstacle.

Selon un mode de réalisation de l'invention, le dispositif comporte une seconde carte de conversion de temps permettant de calculer la distance d'un éventuel second obstacle se présentant sur le trajet du faisceau d'émission, pendant que la première carte traite le calcul correspondant au premier obstacle détecté.

Selon un mode de réalisation de l'invention, pour calculer la distance de l'obstacle, le microprocesseur utilise, à chaque impulsion du faisceau laser, l'écho parasite dû à l'émission de celui-ci.

Selon un mode de réalisation de l'invention, la valeur du seuil de détection par le récepteur d'écho est généré par le microprocesseur en fonction de paramètres extérieurs, tels que l'humidité ou la luminosité.

Selon un mode de réalisation de l'invention, les échos perçus par le récepteur sont amplifies selon une loi qui correspond à une fonction logarithmique de leur distance, de façon à ce que les échos perçus à une faible distance soient moins amplifiés que ceux qui sont perçus à une plus grande distance du véhicule.

Selon un mode de de réalisation de l'invention, l'angle α est égal à 0,5 degrés.

L'invention sera mieux comprise à la lecture de la description suivante d'un mode de réalisation de l'invention, en liaison avec les dessins annexes sur lesquels :

    – la figure 1 situe l'implantation du dispositif de détection sur le véhicule,

    – la figure 2 représente l'appareil de détection et de réception mis en oeuvre,

    – la figure 3 est un schéma simplifie du dispositif faisant l'objet de l'invention,

    – la figure 4 représente la section de payasage balayée par le faisceau laser,

    – la figure 5 est un diagramme fonctionnel du dispositif,

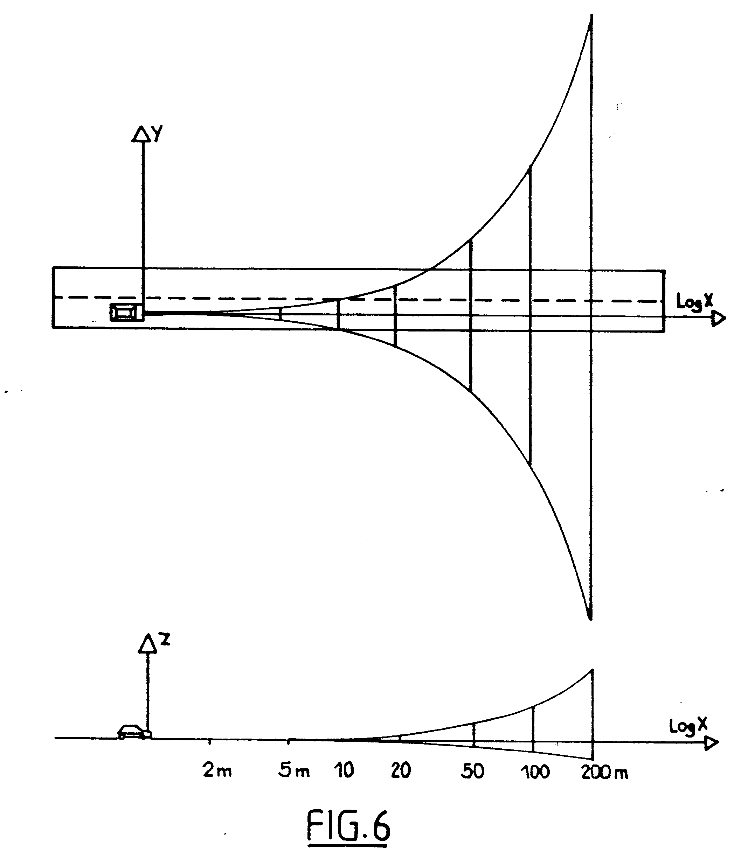

    – la figure 6 est un diagramme angulaire logrithmique du balayage, en site et en gisement.

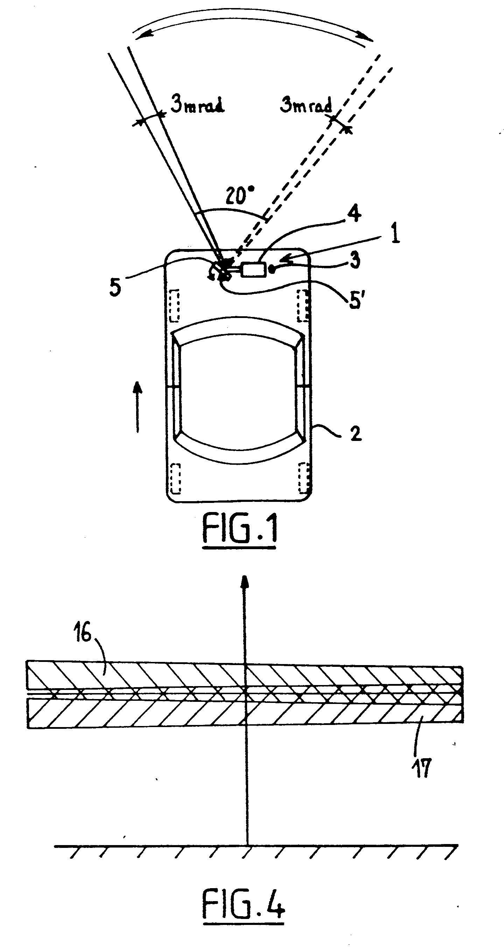

La figure 1 fait apparaître le dispositif de détection d'obstacles et de mesure de distance 1 conforme à l'invention implante dans la partie avant d'un véhicule 2.

Sur cette figure, on distingue notamment la diode laser d'émission 3, l'optique d'émission 4, le miroir 5,5' tournant dans une première position 5 correspondant à l'origine angulaire relative du balayage, c'est-à-dire la position dans laquelle le laser 3 commence à émettre, et dans une seconde position correspondant 5' à la fin du balayage, c'est-à-dire à la fin de l'émission du laser 3. L'angle de balayage, délimité par ces deux positions est ici, à titre d'exemple, de l'ordre de 20 degrés.

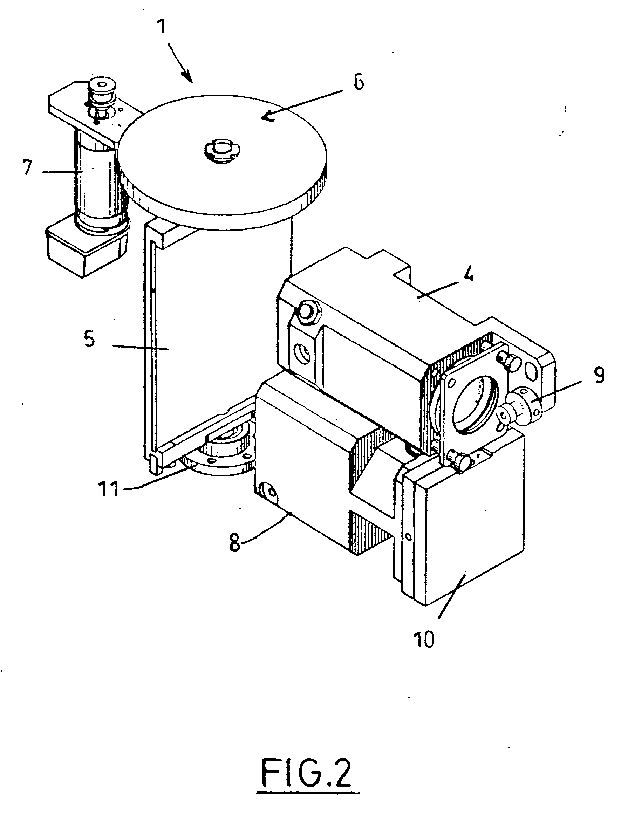

La figure 2 met en évidence la position relative du miroir de balayage 5, monté sur le plateau 6 entraîne en rotation par le moteur à courant continu 7, vis-à-vis de l'ensemble optique d'émission 4 et de réception 8. Cet ensemble 4, 8 est associe à une diode laser d'émission 9 et à un détecteur laser 10. Le détecteur laser 10, jouant le rôle de récepteur d'écho est un récepteur à photodiode à avalanche de forme rectangulaire 10. La photodiode 10 est placée derrière l'optique de réception 8. Sous le miroir 5, on remarque le codeur optique 11 dont le rôle sera précisé plus loin.

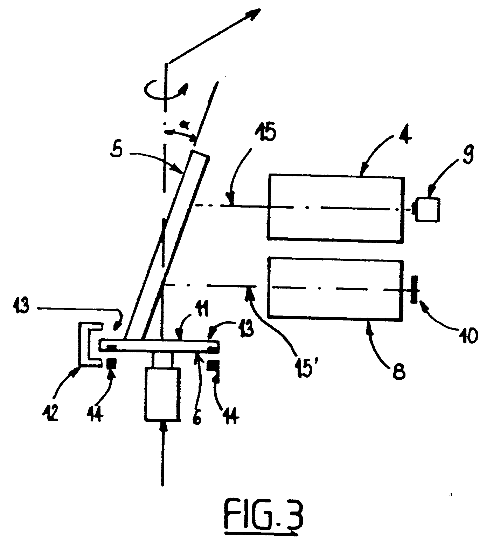

La figure 3, sur laquelle on retrouve pour l'essentiel les mêmes éléments, montre que le miroir 5 est incline d'un angle α par rapport à la verticale. L'angle α pourra par exemple être égal à 0,5 degrés. Outre le codeur optique 11 et son système de lecture 12, on distingue deux aimants permanents intégrés au plateau 6, et diamétralement opposés sur celui-ci. Deux détecteurs à effet Hall 14, non tournants sont disposes à proximité du codeur optique 11 sans être en contact avec les aimants 13. Ces détecteurs sont également diamétralement opposes vis-à-vis du plateau 6. Les aimants permanents 13 et les détecteurs à effet Hall 14 constituent un codeur mécanique 13, 14 dont le rôle apparaîtra clairement au fil de la description.

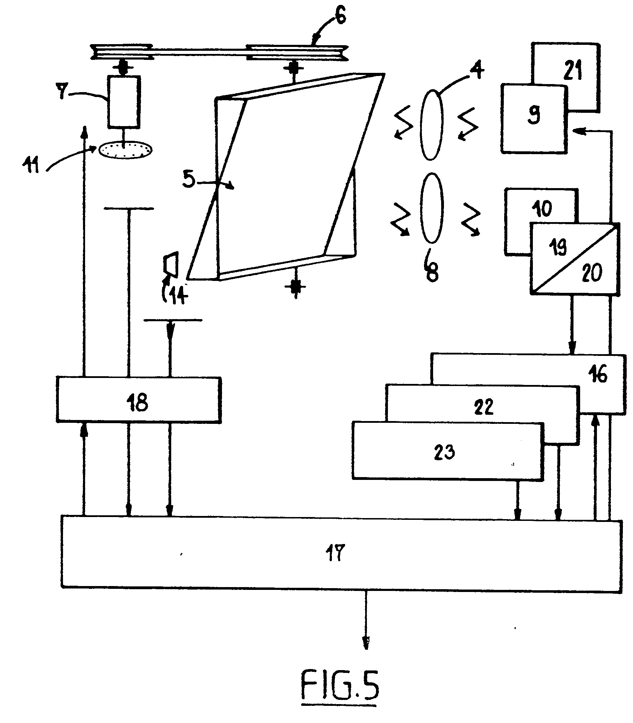

Le fonctionnement du dispositif est le suivant. Le miroir 5 est entraîne en rotation continue autour d'un axe vertical par le moteur d'entraînement 7. Le faisceau 15 émis par la diode laser 9 traverse l'optique d'émission 4 et se réfléchit sur la surface du miroir 5. L'inclinaison α de celui-ci engendre une déviation en hauteur du faisceau, dans les limites établies par l'optique 4, 8 et la forme rectangulaire du récepteur 10. Sur la figure 4, on distingue une première bande 16, correspondant au balayage assuré par la première moitié de la révolution du miroir, et une seconde bande 17, décalée en hauteur par rapport à la première, qui correspond à la seconde moitié de la révolution.

La figure 3 précédemment décrite fait encore apparaître que les voies d'émission 15 et de réception 15' du faisceau sont parallèles et superposées. Le miroir incline 5 se trouve devant ces deux voies 15, 15' si bien qu'en cas de détection d'un obstacle, la voie de réception 15' reçoit instantanément les échos de retour. La photodiode rectangulaire 10, placé derrière l'optique de réception 8, est verticale et orientée perpendiculairement à l'axe optique du faisceau 15'. La forme rectangulaire de la photodiode 10 permet de collecter l'ensemble des échos de retour sur une large plage angulaire verticale. On est ainsi sûr de collecter l'ensemble des échos suscités par les obstacles présents dans le champ vertical couvert par le LIDAR. L'utilisation d'une photodiode rectangulaire est très avantageuse par rapport à celle d'une photodiode classique ponctuelle placée au foyer de l'optique de réception. Il est important de noter à ce sujet qu'on ne recherche pas une très grande précision angulaire en direction verticale. En résumé, l'inclinaison du miroir d'un angle $\alpha$ par rapport à la verticale permet d'augmenter la probabilité de détection en hauteur, la structure de l'optique et la forme rectangulaire du détecteur déterminant la hauteur du champ de détection effectif.

La maîtrise du balayage nécessite le contrôle des trois paramètres suivants : l'origine angulaire absolue du balayage, l'origine angulaire relative du balayage et l'angle de balayage. L'origine angulaire absolue du balayage est le repère géométrique fixe à partir duquel, la position angulaire instantanée du miroir 5 peut être mesurée. L'origine angulaire relative du balayage correspond au début de l'émission du laser 9. L'angle de balayage, s'ouvrant à l'origine angulaire relative, détermine la fin de l'émission.

L'origine angulaire absolue du balayage est déterminée à l'aide du codeur mécanique 13, 14 schématisé sur la figure 3. Le codeur mécanique comporte deux aimants permanents 13 montés en position diamétralement opposée sur le plateau tournant 6. Les deux aimants 13 défilent devant deux détecteurs à effet Hall 14 lors de la rotation du plateau 6. Ces deux détecteurs 14 sont diamétralement opposés par rapport au plateau 6, et placées à proximité de celui-ci, sans toutefois entrer en contact avec les aimants 13. L'origine angulaire absolue du balayage est déterminée par le passage des aimants 13 devant les détecteurs 14.

L'origine angulaire relative du balayage est déterminée à l'aide du codeur optique 11 apparaissant sur la figure 2 et mentionné sur la figure 3. Sur la figure 3, correspondant à un mode de réalisation particulier de l'invention, le codeur optique 11 est intégré au plateau 6. Dans tous les cas, il est solidaire en rotation de celui-ci et délivre des impulsions dont le nombre est exploité. En particulier, le nombre d'impulsions délivrées à partir du passage du miroir devant l'origine angulaire absolue est exploité pour déterminer le début du balayage effectif (origine angulaire relative), et la fin de celui-ci.

Le fonctionnement du dispositif est contrôlé par le microprocesseur 17 mentionné sur la figure 5. Le microprocesseur 17 assure le pilotage de l'émission du LIDAR 1 et la régulation de la vitesse du plateau tournant 6 supportant le miroir 5. Ce pilotage est effectué en fonction des consignes par les origines angulaires absolue et relative déterminées respectivement par le codeur mécanique 13, 14 et par le codeur optique 11.

L'ensemble des signaux correspondants transite par l'amplificateur 18. Le microprocesseur 17 contrôle également la largeur et l'orientation du champ scruté par le LIDAR. L'émetteur 9 est, pour sa part, alimenté par une source à haute tension 21.

Le diagrammme fonctionnel de la figure 5 met également en évidence le rôle de l'horloge 16 : celle-ci reçoit les informations en provenance du récepteur 10, par l'intermédiaire du préamplificateur 19 et de l'amplificateur logarithmique 20. L'amplification logarithmique des échos perçus par le récepteur d'écho 10, en fonction de la distance, a pour but de réduire la plage d'amplitude des échos, en amplifiant dans une moindre mesure les échos perçus à faible distance du véhicule que les échos, perçus plus loin de celui-ci.

Sous le contrôle du microprocesseur, l'horloge 16 a aussi pour fonction de determiner la durée de chaque impulsion et de calculer l'intervalle de temps séparant le début de l'impulsion, du retour de l'écho, en cas de détection d'obstacle. L'horloge est associée à deux cartes de conversion de temps 22, 23. Ces cartes sont destinées à calculer en liaison avec le microprocesseur 17, la distance de l'obstacle, sur la base de la durée déterminée par l'horloge 16. La première carte 22 intervient à chaque détection d'obstacle, tandis que la seconde 23 est sollicitée lorsqu'un second obstacle est détecté sur le trajet du faisceau, alors que la première carte 22 traite le calcul afférant au premier. Avantageusement, le microprocesseur 17 utilise comme base du calcul de la distance de l'obstacle l'écho parasite dû à l'émission de chaque impulsion du faisceau laser.

On peut prévoir encore que la valeur du seuil de détection de l'écho par le récepteur d'écho soit établie par le microprocesseur 17 en fonction de paramètres extérieurs tels que l'humidité ou la luminosité. Enfin il est utile que les échos perçus par le récepteur 10 soient amplifiés selon une loi qui est une fonction logarithmique de leur distance par rapport au véhicule 2, de façon à ce que les échos perçus à faible distance soient moins amplifies que ceux qui sont perçus plus loin de celui-ci.

## Revendications

[1] Dispositif de détection d'obstacles et de mesure de distance à l'aide d'un radar à faisceau laser comportant une diode laser d'émission (9), une optique d'émission (4), un miroir de balayage (5) monté sur un plateau (6) entrâné en rotation par un moteur (7), une optique de réception (8) et un récepteur d'écho (10), caractérisé en ce que le miroir (5) exécuté un mouvement de rotation continu autour d'un axe vertical et en ce qu'il est incliné d'un angle α par rapport à cet axe.

[2] Dispositif de détection d'obstacles et de mesure de distance selon la revendication 1 caractérisé en ce qu'au cours d'une révolution complète du miroir (5), le faisceau d'émission ( 15) balaye successivement deux bandes de même largeur décalées en hauteur, la première, inclinée d'un angle + α par rapport à l'horizontale, correspondant à la première moitié de la révolution, tandis que la seconde, inclinée d'un angle - α par rapport à l'horizontale, correspond à la seconde moitié de la révolution du miroir (5).

[3] Dispositif de détection d'obstacles et de mesure de distance selon la revendication 1, caractérisé en ce que le récepteur d'écho (10) est une photodiode à avalanche de forme rectangulaire.

[4] Dispositif de détection d'obstacles et de meure de distance selon l'une quelconque des revendications précédentes, caractérisé en ce qu'il comporte un codeur mécanique (13, 14) permettant de détecter les origines angulaires du balayage.

[5] Dispositif de détection d'obstacles et de mesure de distance selon la revendication 4, caractérisé en ce que le codeur mécanique (13, 14) est constitué de deux aimants permanents (13) montés en position diamétralement opposée sur le plateau (6), et défilant devant deux détecteurs à effet Hall (14) placés à proximité du plateau (6), diamétralement opposés par rapport à celui-ci, et n'entrant pas en contact avec les aimants (13).

[6] Dispositif de détection d'obstacles et de mesure de distance selon l'une quelconque des revendications précédentes, caractérisé en ce qu'il comporte un codeur optique (11) solidaire en rotation du plateau (6), et délivrant des impulsions dont le nombre, compté à partir du passage du miroir devant l'origine angulaire absolue du miroir, est exploité pour déterminer l'origine angulaire du balayage et la fin de celui-ci, correspondant respectivement au début et à la en de l'émission du faisceau laser (15).

[7] Dispositif de détection d'obstacles et de mesure de distance selon l'une quelconque des revendications précédentes, caractérisé en ce qu'il comporte un microprocesseur (17) contrôlant la vitesse de rotation du moteur (7) entraînant en rotation le plateau (6) tournant et le codeur optique (11), et recevant les impulsions émises par les détecteurs à effet Hall (14) et par le codeur (11) optique, par l'intermédiaire d'un amplificateur (19).

[8] Dispositif de détection d'obstacles et de mesure de distance selon l'une quelconque des revendications précédentes, caractérisé en ce qu'il comporte une horloge (16) responsable, sous le contrôle du microprocesseur (17), du déclenchement et de l'arrêt de l'émission du faisceau laser.

[9] Dispositif de détection d'obstacles et de mesure de distance selon la revendication 8, caractérisé en ce que lorsque le récepteur d'écho (10) reçoit un écho dû à la rencontre d'un obstacle par le faisceau d'émission (15), l'horloge détermine la durée t séparant le début de l'émission, de la réception de l'écho.

[10] Dispositif de détection d'obstacles et de mesure de distance selon la revendication 9, caractérisé en ce qu'il comporte une première carte de conversion de temps (22), calculant, à partir de la durée t déterminée par l'horloge (16), la distance de l'obstacle.

[11] Dispositif de détection d'obstacles et de mesure de distance selon la revendication 10, caractérisé en ce qu'il comporte une seconde carte (23) de conversion de temps, permettant de calculer la distance d'un éventuel second obstacle se présentant sur le trajet du faisceau d'émission, pendant que la première carte (22) traite le calcul correspondant au premier obstacle détecté.

[12] Dispositif de détection d'obstacles et de mesure de distance selon l'une quelconque des revendication 7 à 11, caractérisé en ce que, pour calculer la distance de l'obstacle, le microprocesseur (17) utilise à chaque impulsion du faisceau laser, l'écho parasite dû à l'émssion de celui-ci.

[13] Dispositif de détection d'obstacles et de mesure de distance selon l'une quelconque des revendications 7 à 12, caractérisé en ce que la valeur du seuil de détection par le récepteur d'écho (10), est généré par le microprocesseur en fonction de paramètres extérieurs, tels que l'humidité ou la luminosité.

[14] Dispositif de détection d'obstacles et de mesure de distance selon l'une quelconque des revendications 7 à 13, caractérisé en ce que les échos perçus par le récepteur (10) sont amplifiés selon une loi qui correspond à une fonction logarithmique de leur distance, de façon telle que les échos perçus à faible distance sont moins amplifiés que ceux qui sont perçus plus loin du véhicule.

[15] Dispositif de détection d'obstacles et de mesure de distance selon l'une quelconque des revendications précédentes, caractérisé en ce que l'angle α est égal à 0,5 degrés.

FIG.1

FIG.4

FIG.2

FIG.3

FIG.5

FIG.6

**Office européen des brevets**

# RAPPORT DE RECHERCHE EUROPEENNE

Numero de la demande

EP 91 40 3569

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2 576 126 (REINAUD ET AL) <br> * page 3 - page 5; figures * <br> --- | 1-15 | G01S17/88 <br> G01S7/48 |
| A | US-A-4 849 731 (MELOCIK) <br> * figures * <br> --- | 1 | |
| A | US-A-4 796 198 (BOULTINGHOUSE ET AL) <br> * figure 5 * <br><br> ----- | 1 | |

**DOMAINES TECHNIQUES RECHERCHES (Int. Cl.5 )**

G01S

Le présent rapport a été établi pour toutes les revendications

| Lieu de la recherche | Date d'achèvement de la recherche | Examinateur |
|---|---|---|
| LA HAYE | 09 MARS 1992 | DEVINE J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................
& : membre de la même famille, document correspondant

EPO FORM 1503 03.82 (P0402)